# FASCICULE DE BREVET EUROPEEN

(11) **EP 0 419 380 B1**
(45) Date de publication et mention de la délivrance du brevet: **17.08.1994**
(21) Numéro de dépôt: 90420408.8
(22) Date de dépôt: 18.09.1990
(51) Int. Cl.: H04N 7/00

(54) **Procédé de synchronisation du récepteur d'un signal de télévision de type mac**
Synchronisationsverfahren des Empfängers eines Mac-Norm-Fernsehsignals
Method for synchronizing the receiver of a Mac norm television signal

(30) Priorité: 22.09.1989 FR 8912721
(43) Date de publication de la demande: 27.03.1991
(73) Titulaire: SGS-THOMSON MICROELECTRONICS S.A., 94250 Gentilly (FR)
(72) Inventeur: Olivier, Queinnec, F-67100 Strasbourg (FR)
(74) Mandataire: de Beaumont, Michel

(56) Documents cités:
- EP-A- 0 297 918
- GB-A- 2 196 510

## Description

La présente invention concerne la reconnaissance des mots de synchronisation ligne et de synchronisation trame dans des signaux de télévision de type MAC.

La norme MAC est une norme générale qui comprend diverses sous-normes telles que les normes C-MAC, D-MAC, D2-MAC. Les normes sus-mentionnées concernent des signaux de télévision à 625 lignes et 1296 échantillons par ligne. Toutefois, le concept de la norme MAC est tout à fait général et peut s'appliquer à d'autres types d'images de télévision. Les signaux de télévision de type MAC sont, d'une manière générale, utilisés pour transmettre des informations numériques telles que son et données, ainsi que des informations analogiques telles que couleur et luminance.

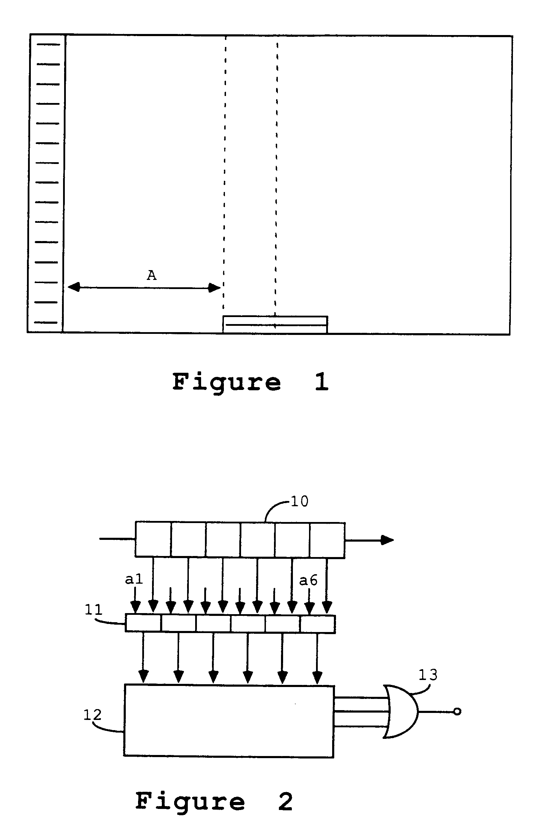

Dans le cadre de la présente description, on s'intéresse à la synchronisation à la réception sur un signal de type MAC. Comme le représente la figure 1, un signal de type MAC comprend des informations rassemblées par trames et séquentielles selon un balayage par ligne. Dans chaque ligne, à une position donnée, par exemple les premiers bits de la ligne, sont insérés des mots de synchronisation de ligne. Dans des exemples pratiques, ces mots peuvent être des mots de 6 bits W1 et W1* tels que W1 = 001011 et W1* = 110100. Les mots de synchronisation de trame peuvent être disposés à la dernière ligne de chaque trame, et décalés d'un nombre de bits déterminé A par rapport aux mots de synchronisation ligne. Classiquement, ces mots de synchronisation trame (FSW) comprennent 64 bits et sont inversés d'une trame à la suivante.

La façon classique de reconnaître des mots de synchronisation, que ce soient des mots de ligne ou des mots de trame, consiste, comme le représente la figure 2, à faire passer les bits incidents dans un registre à décalage 10 comprenant autant de cellules que le mot à identifier comprend de bits. A chaque décalage, le contenu du registre 10 est comparé bit à bit à un code prédéterminé (a1 ... a6 dans le cas d'un mot de 6 bits). Cette comparaison bit à bit peut être réalisée par un ensemble de portes OU Exclusif 11. L'identité de l'ensemble des bits identifie le mot recherché.

En pratique, étant donné que le signal de télévision peut être bruité par la transmission, on est généralement amené à dire que la comparaison est bonne s'il y a moins qu'un taux d'erreur déterminé. On envoie donc le résultat de la comparaison bit à bit dans un circuit combinatoire 12 qui fournit par exemple des sorties 12-1, 12-2, 12-3 quand il y a 0 erreur, 1 erreur, 2 erreurs, respectivement. Si un mot doit être accepté quand il comprend au plus 2 erreurs, ces trois sorties sont reliées à une porte OU 13 qui fournit à sa sortie le signal de reconnaissance recherché.

Pour mémoire, on rappelera que ce nombre d'erreurs toléré est appelé par les statisticiens "distance de Hamming". Dans l'exemple précédent, la distance de Hamming était de 2. L'ensemble du circuit de la figure 2 est appelé détecteur par corrélation ou corrélateur.

En pratique, pour reconnaître les mots de synchronisation ligne et trame d'un signal MAC, il faudra prévoir un corrélateur pour les mots de ligne et un corrélateur pour les mots de trame, chacun de ces corrélateurs comprenant des moyens pour reconnaître un mot et son inverse.

Il y a peu de problèmes en ce qui concerne le corrélateur de reconnaissance des mots de synchronisation ligne qui ont une étendue de l'ordre de quelques bits mais le mot de synchronisation de trame est généralement un mot long, par exemple de 64 bits. Ceci exige d'utiliser un corrélateur de grande dimension occupant une surface de silicium non négligeable.

Un objet de la présente invention est de prévoir un tel circuit de reconnaissance de mots de synchronisation et en particulier de synchronisation trame réalisable de façon simplifiée par rapport aux systèmes classiques.

Plus particulièrement, la présente invention propose d'effectuer la reconnaissance du mot de synchronisation trame sur seulement une partie de ses bits, par exemple 16 ou 32 au lieu de 64. La présente invention vise à obtenir ce résultat sans diminuer la précision et la fiabilité de la synchronisation. Dans ce but, l'invention prévoit de rechercher initialement le mot de synchronisation de trame dans une fenêtre de recherche verticale disposée à une distance horizontale prédéterminée des mots de synchronisation de ligne qui ont été préalablement recherchés et trouvés puis, une fois qu'un premier mot de trame a été découvert, de rechercher le mot de synchronisation trame suivant dans une fenêtre de vérification constituée par la combinaison de cette fenêtre verticale et d'une fenêtre de ligne disposée à une distance verticale déterminée du mot de synchronisation de trame précédent.

Pour atteindre ces objets ainsi que d'autres, la présente invention prévoit un procédé de synchronisation d'un récepteur de télévision sur des signaux de type MAC comprenant un premier type de mots de synchronisation de ligne de p bits à chaque ligne et un deuxième type de mots de synchronisation de trame de n bits à chaque trame, les mots du deuxième type étant décalés horizontalement d'une distance donnée (A) par rapport aux mots du premier type. Ce procédé comprend les étapes suivantes :
(1) corréler chaque séquence de bits incidente avec les mots de synchronisation de ligne ;
(2) dès qu'un mot candidat est détecté, déterminer une première fenêtre de vérification de mots de synchronisation de ligne à l'emplacement du candidat ainsi qu'une deuxième fenêtre de recherche de mots de synchronisation de trame à ladite distance (A) de la première fenêtre, cette deuxième fenêtre ayant une étendue de m bits (m < n) ;
(3) vérifier que les mots de synchronisation de ligne apparaissent pendant un premier nombre déterminé de lignes successives à l'intérieur de la première fenêtre ; si non revenir à l'étape (1), si oui passer à l'étape (4) ;
(4) synchroniser le récepteur en ligne ;
(5) ensuite et simultanément avec les étapes suivantes, contrôler si les mots de synchronisation ligne sont absents de la première fenêtre pendant un deuxième nombre prédéterminé de lignes successives ; si oui, revenir à l'étape (1) ;
(6) corréler chaque mot apparaissant dans la deuxième fenêtre de recherche déterminée à l'étape (2) avec les mots de synchronisation de trame ;
(7) dès qu'un mot candidat de synchronisation de trame est détecté, positionner une fenêtre de vérification de mots de synchronisation de trame à la ligne où ce mot candidat a été trouvé ;
(8) vérifier que les mots de synchronisation de trame apparaissent un nombre déterminé de trames successives à l'intersection des fenêtres de trame déterminées aux étapes (2) et (7) ; sinon, revenir à l'étape (6), si oui, passer à l'étape suivante ;
(9) synchroniser le récepteur en trame ;
(10) contrôler si les mots de synchronisation de trame sont absents pendant un nombre prédéterminé de trames successives de ladite intersection de fenêtres ; si oui, revenir à l'étape (6).

Ces objets, caractéristiques et avantages ainsi que d'autres de la présente invention seront exposés plus en détail dans la description suivante d'un mode de réalisation particulier faite en relation avec les figures jointes parmi lesquelles :
la figure 1 représente une trame de type MAC ;
la figure 2 représente un corrélateur classique ;
les figures 3 et 4 illustrent des étapes successives de recherche de synchronisation en ligne selon la présente invention ; et
la figure 5 illustre sous forme d'organigramme le procédé selon la présente invention.

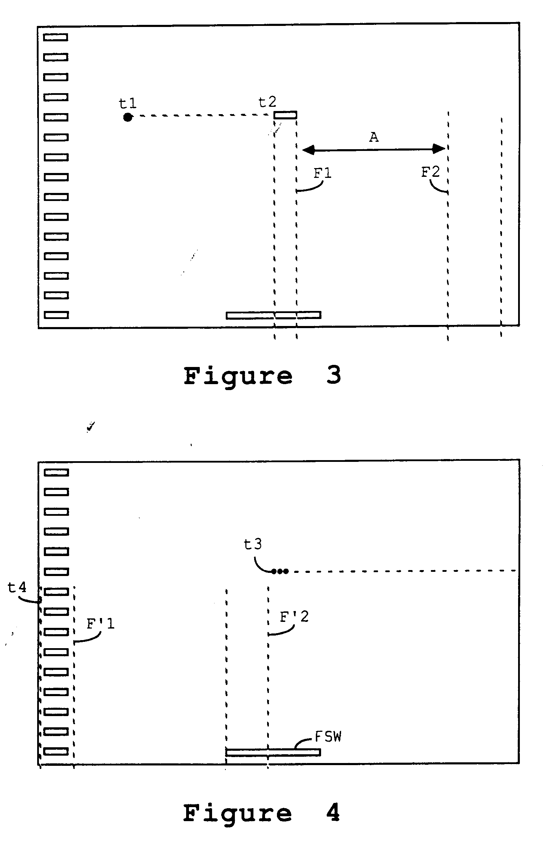

la figure 3 représente une trame de données de signal de télévision de type MAC. On suppose que l'on commence par recevoir cette trame à un instant t1. A partir de cet instant, un corrélateur de mots de synchronisation ligne recherche un mot candidat. On suppose qu'il en trouve un à l'instant t2 (comme le montre la figure, il s'agit d'un mauvais candidat). A partir de cet instant t2, on détermine deux fenêtres, une première fenêtre F1 de vérification de mots de ligne et une deuxième fenêtre F2 de recherche de mots de trame distante de la fenêtre F1 de la valeur A indiquée en figure 1.

Ensuite, comme le représente la figure 4, à l'instant t3 on analyse le mot situé dans la fenêtre F1 et qui suit verticalement le mot candidat découvert à l'instant t2. S'il s'agit d'un mot erroné, la recherche reprend jusqu'à l'instant t4 où l'on trouve un mot candidat qui, dans l'exemple illustré, est bien un mot de synchronisation ligne. On établit en conséquence des fenêtres F′1 et F′2 de mots de synchronisation ligne et de mots de synchronisation trame et on retrouvera normalement par la suite des mots de synchronisation ligne satisfaisants et la synchronisation ligne sera établie et maintenue.

La synchronisation ligne étant établie, la recherche du mot de synchronisation trame peut commencer à l'intérieur de la fenêtre F′2. Cette recherche s'effectue de façon analogue à la recherche du mot de synchronisation ligne, à savoir que :
- on recherche d'abord un candidat,
- on crée une fenêtre (qui ici est une ligne) à l'emplacement du candidat trouvé,
- on vérifie que le mot de synchronisation trame est trouvé de façon répétitive à l'intersection de cette fenêtre et de la fenêtre F′2. Si ce n'est pas le cas, on recherche un nouveau candidat. Si c'est bien le cas, on considère que la synchronisation en trame est effectuée.

On notera dans la figure 3 que l'on a établi, pour la recherche du mot de trame, une fenêtre verticale F′2 plus étroite que la largeur effective du mot de synchronisation de trame FSW. En effet, selon un avantage de la présente invention, comme on ne recherche le mot de trame qu'à un emplacement de la ligne et non pas dans toutes les positions de la ligne, la probabilité de rencontre d'un mauvais candidat est considérablement réduite (sensiblement mille fois plus faible si une ligne comprend un millier de bits). Ainsi, on peut faire une recherche par corrélation des mots de trame sur un nombre de bits réduit de ces mots de trame et donc simplifier beaucoup le corrélateur. Les bits considérés peuvent se situer à un emplacement quelconque dans le mot de synchronisation trame.

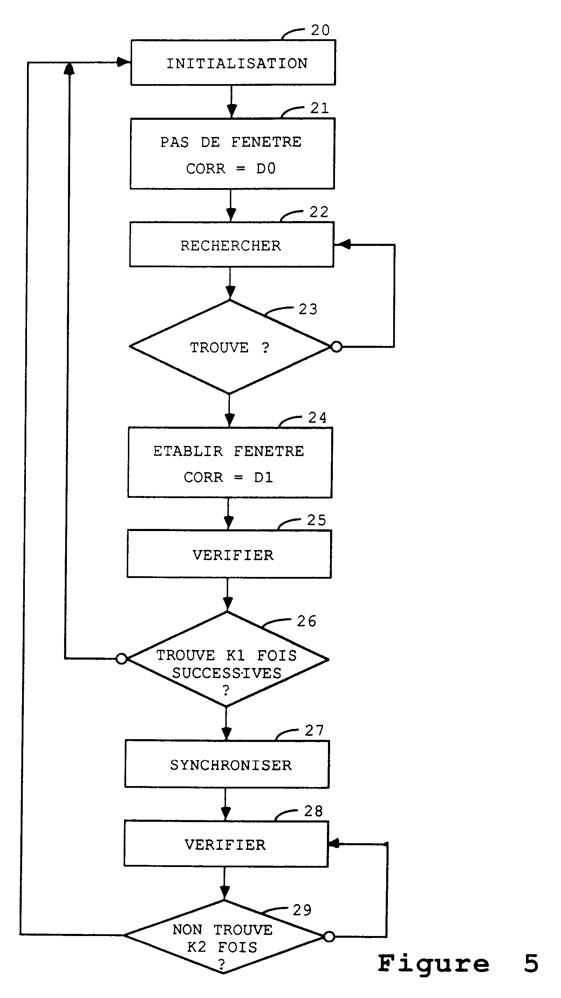

La présente invention va maintenant être expliquée plus en détail en relation avec la figure 5 qui illustre sous forme d'organigramme le procédé proposé.

Cet organigramme illustre les étapes suivantes pour la synchronisation ligne.
- Une étape d'initialisation 20 dans laquelle le processus est mis en route. Comme le représente le bloc 21, à cette étape aucune fenêtre n'est établie et l'on fixe une première distance de Hamming ou distance de corrélation D0. Par exemple, cette distance D0 sera de 0, c'est-à-dire que l'on recherche un premier mot de synchronisation sans tolérer aucune erreur.
- Des étapes 22 et 23 correspondant à un processus de recherche qui fonctionne en boucle jusqu'à ce qu'un mot de synchronisation soit trouvé.
- Une étape 24 dans laquelle, dès que ce premier mot de synchronisation a été trouvé, on établit une fenêtre de vérification correspondant à l'emplacement trouvé et, pour la vérification dans cette fenêtre, on fixe une deuxième distance de Hamming ou taux de corrélation D1, c'est-à-dire que l'on acceptera comme exacts des mots de synchronisation présentant un nombre d'erreurs inférieur à D1. Ce choix est effectué pour tenir compte d'éventuels parasitages lors de la transmission. On fixe de plus, en relation avec la fenêtre de vérification du mot de synchronisation ligne, une fenêtre de recherche du mot de synchronisation de trame.
- Une étape de vérification 25, 26 au cours de laquelle on vérifie si l'on trouve bien n fois successives le mot de synchronisation ligne recherché dans la fenêtre précédemment établie. Si la réponse est NON, on revient à l'étape d'initialisation. Si la réponse est OUI, on passe à l'étape suivante.
- Une étape 27 de synchronisation en ligne du récepteur.
- Une étape de vérification 28, 29 par laquelle, si le mot de synchronisation ligne n'est pas trouvé k fois de suite, on revient à l'état d'initialisation 20 ; sinon, on reste synchronisé. Cette dernière vérification est utile notamment pour le cas où il se produirait un brouillage important à l'émission, ou bien pour le cas où le spectateur changerait de chaîne de télévision.

Des moyens de mise en oeuvre de l'invention apparaîtront immédiatement à l'homme de l'art. Par exemple, pour l'établissement de fenêtres, il suffira de prévoir des compteurs comptant des valeurs égales au nombre de bits d'une ligne ou à un nombre de bits choisi correspondant à la distance entre un bit de synchro ligne et un bit de synchro trame et de valider, en fonction de ces comptages, les circuits de corrélation.

On a représenté en figure 5 un organigramme pour la synchronisation en ligne. Le même processus s'applique à la synchronisation en trame et ces processus fonctionneront en parallèle ; toutefois la recherche des mots de synchronisation trame ne pourra effectivement commencer qu'après l'étape 24 du processus de synchronisation ligne ; et, lors de ce processus de synchronisation trame on établira une fenêtre de vérification de mot de trame constituée d'une combinaison de la fenêtre verticale de recherche de mot de trame établie lors de l'étape 24 du processus de synchronisation ligne et d'une fenêtre horizontale située à une distance déterminée (nombre de lignes d'une trame) du premier mot de trame découvert.

Ainsi, si chacune des trames comprend 1296 positions par ligne et qu'il y a 625 lignes par trame, le mot de synchronisation trame sera recherché une seule fois toutes les 1296 x 625 positions. Ceci montre bien que l'on peut réduire beaucoup le nombre de bits du mot de trame sur lesquels on souhaite effectuer la recherche sans réduire la précision. En pratique, si les mots de trame ont une longueur de 64 bits, on pourra effectuer la recherche seulement sur 8, 16, 24 ou 32 bits. D'autre part, on pourra choisir des distances de Hamming différentes pour les différentes synchronisations, par exemple :
D0 = D1 = 0 pour la synchronisation ligne, et
D0 = 2 et D1 = 5 pour la synchronisation trame.

## Revendications

1. Procédé de synchronisation d'un récepteur de télévision sur des signaux de type MAC comprenant un premier type de mots de synchronisation de ligne de p bits à chaque ligne et un deuxième type de mots de synchronisation de trame de n bits à chaque trame, les mots du deuxième type étant décalés horizontalement d'une distance donnée (A) par rapport aux mots du premier type, caractérisé en ce qu'il comprend les étapes suivantes :
(1) corréler chaque séquence de bits incidente avec les mots de synchronisation de ligne ;
(2) dès qu'un mot candidat est détecté, déterminer une première fenêtre de vérification de mots de synchronisation de ligne à l'emplacement du candidat ainsi qu'une deuxième fenêtre de recherche de mots de synchronisation de trame à ladite distance (A) de la première fenêtre, cette deuxième fenêtre ayant une étendue de m bits (m < n) ;
(3) vérifier que les mots de synchronisation de ligne apparaissent pendant un premier nombre déterminé de lignes successives à l'intérieur de la première fenêtre ; si non revenir à l'étape (1), si oui passer à l'étape (4) ;
(4) synchroniser le récepteur en ligne ;
(5) ensuite et simultanément avec les étapes suivantes, contrôler si les mots de synchronisation ligne sont absents de la première fenêtre pendant un deuxième nombre prédéterminé de lignes successives ; si oui, revenir à l'étape (1) ;
(6) corréler chaque mot apparaissant dans la deuxième fenêtre de recherche déterminée à l'étape (2) avec les mots de synchronisation de trame ;
(7) dès qu'un mot candidat de synchronisation de trame est détecté, positionner une fenêtre de vérification de mots de synchronisation de trame à la ligne où ce mot candidat a été trouvé ;
(8) vérifier que les mots de synchronisation de trame apparaissent un nombre déterminé de trames successives à l'intersection des fenêtres de trame déterminées aux étapes (2) et (7) ; sinon, revenir à l'étape (6), si oui, passer à l'étape suivante ;
(9) synchroniser le récepteur en trame ;
(10) contrôler si les mots de synchronisation de trame sont absents pendant un nombre prédéterminé de trames successives de ladite intersection de fenêtres ; si oui, revenir à l'étape (6).

2. Procédé selon la revendication 1, caractérisé en ce que l'étape (1) est réalisée en choisissant une distance de Hamming (D0) inférieure ou égale à celle des étapes (3) et (5).

3. Procédé selon la revendication 1, caractérisé en ce que l'étape (6) est réalisée en choisissant une distance de Hamming (D0) inférieure ou égale à celle des étapes (8) et (10).

## Patentansprüche

1. Verfahren zum Synchronisieren eines TV-Empfängers auf MAC-Signale, welche eine erste Art von Zeilensynchronisierungswörtern mit einer Länge von p Bit bei jeder horizontalen Zeile und eine zweite Art von Bildsynchronisierungswörtern mit einer Länge von n Bit bei jedem Bild aufweisen, wobei die Wörter der zweiten Art relativ zu den Wörtern der ersten Art um eine vorgegebene Strecke (A) verschoben werden, dadurch gekennzeichnet, daß es die folgenden Schritte aufweist:
(1) Korrelieren jeder Folge von ankommenden Bits mit den Zeilensynchronisierungswörtern,
(2) sobald ein Kandidatenwort erfaßt wird, Bilden eines ersten Prüffensters zum Verifizieren von Zeilensynchronisierungswörtern bei der Position des Kandidatenwortes sowie ein zweites Suchfenster zum Suchen von Bildsynchronisierungswörtern bei der Entfernung (A) vom ersten Fenster, wobei das zweite Fenster eine Breite von m Bit hat (m < n),
(3) Verifizieren, ob die Zeilensynchronisierungswörter während einer ersten vorgegebenen Anzahl von aufeinanderfolgenden Zeilen innerhalb des ersten Fensters auftreten, wenn nein, Zurückgehen zu Schritt (1), wenn ja, weiter zu Schritt (4),
(4) Synchronisieren des Empfängers den Zeilen entsprechend,
(5) dann und gleichzeitig mit den folgenden Schritten Überprüfen, ob die Zeilensynchronisierungswörter während einer zweiten vorgegebenen Anzahl von aufeinanderfolgenden Zeilen im ersten Fenster fehlen, wenn ja, zurück zu Schritt (1),
(6) Korrelieren von jedem in dem zweiten, während Schritt (2) gebildeten Suchfenster auftretenden Wort mit den Bildsynchronisierungswörtern,
(7) sobald ein Bildsynchronisierungs-Kandidatenwort erfaßt wird, Positionieren eines Prüffensters zum Verifizieren der Anwesenheit der Bildsynchronisierungswörter bei der Zeile, in der dieses Kandidatenwort gefunden worden ist,
(8) Verifizieren, ob die Bildsynchronisierungswörter während einer vorgegebenen Anzahl von aufeinanderfolgenden Bildern bei der Schnittstelle der während der Schritte (2) und (7) gebildeten Bildfenster auftreten, wenn nein, Zurückgehen zu Schritt (6), wenn ja, weiter zum nächsten Schritt,
(9) Synchronisieren des Empfängers den Bildern entsprechend,
(10) Verifizieren, ob die Bildsynchronisierungswörter während einer vorgegebenen Anzahl von aufeinanderfolgenden Bildern der Fenster-Schnittstelle fehlen, wenn ja, Zurückgehen zu Schritt (6).

2. Verfahren nach Anspruch 1, bei dem während Schritt (1) ein Hamming-Abstand (DO) gewählt wird, der kleiner oder gleich dem der Schritte (3) und (5) ist.

3. Verfahren nach Anspruch 1, bei dem während Schritt (6) ein Hamming-Abstand (DO) gewählt wird, der kleiner oder gleich dem der Schritte (8) und (10) ist.

## Claims

1. A method for synchronizing a TV receiver on MAC-type signals comprising a first type of p-bits line synchronization words at each horizontal line and a second type of n-bits frame synchronization words at each frame, the words of the second type being horizontally shifted by a determined distance (A) with respect to the words of the first type, characterized in that it comprises the following steps:
(1) correlating each sequence of incoming bits with line synchronization words;
(2) as soon as a candidate word is detected, forming a first checking window for verifying line synchronization words at the position of the candidate word as well as a second search window for searching frame synchronization words at said distance (A) from the first window, said second window having a width of m bits (m < n);
(3) verifying whether the line synchronization words appear during a first determined number of successive lines inside said first window; if no, go back to step (1); if yes, go to step (4);
(4) synchronizing the receiver according to lines;
(5) then and simultaneously with the following steps, checking whether the line synchronization words are absent from the first window during a second predetermined number of successive lines; if yes, go back to step (1);
(6) correlating each word appearing in the second search window formed during step (2) with frame synchronization words;
(7) as soon as a frame synchronization candidate word is detected, positioning a checking window for verifying the presence of the frame synchronization words at the line where this candidate word has been found;
(8) verifying whether the frame synchronization words appear during a determined number of successive frames at the intersection of the frame windows formed during steps (2) and (7); if no, go back to step (6); if yes, go to the next step;
(9) synchronizing the receiver according to frames;
(10) verifying whether the frame synchronization words are absent during a predetermined number of successive frames of said window intersection; if yes, go back to step (6).

2. A method according to claim 1, wherein, during step (1), a Hamming distance (DO) smaller than or equal to that of steps (3) and (5) is selected.

3. A method according to claim 1, wherein, during step (6), a Hamming distance (DO) smaller than or equal to that of steps (8) and (10) is selected.
